# EUROPEAN PATENT SPECIFICATION

(11) **EP 1 717 535 B1**
(45) Date of publication and mention of the grant of the patent: **02.06.2010**
(21) Application number: 04792392.5
(22) Date of filing: 14.10.2004
(51) Int. Cl.: F27D 3/12, C04B 35/64

(54) **TRAY FOR HEAT TREATMENT AND METHOD OF MANUFACTURING CERAMIC PRODUCT USING THE TRAY**
SCHALE ZUR WÄRMEBEHANDLUNG UND VERFAHREN ZUR HERSTELLUNG EINES KERAMIKPRODUKTS UNTER VERWENDUNG DER SCHALE
PLATEAU DE TRAITEMENT THERMIQUE ET METHODE DE FABRICATION DE PRODUIT EN CERAMIQUE AVEC LE PLATEAU

(30) Priority: 29.01.2004 JP 2004021381
(43) Date of publication of application: 02.11.2006
(73) Proprietor: NGK Insulators, Ltd., Nagoya-shi, Aichi 467-8530 (JP)
(72) Inventor: TSUJI, Hiroyuki; c/o NGK INSULATORS, LTD., Nagoya-shi, Aichi 4678530 (JP); KITAMURA, Kazumasa; c/o NGK INSULATORS, LTD., Nagoya-shi, Aichi 4678530 (JP); IKEDA, Koji; c/o NGK INSULATORS, LTD., Nagoya-shi, Aichi 4678530 (JP)
(74) Representative: Paget, Hugh Charles Edward
(86) International application number: PCT/JP2004/015161
(87) International publication number: WO 2005/073653

(56) References cited:
- GB-A- 2 144 207
- JP-A- 5 270 923
- JP-A- 6 003 067
- JP-A- 8 166 191
- JP-A- 2003 262 477
- JP-U- 3 013 095
- JP-U- 51 071 848
- US-A1- 5 840 436

## Description

### TECHNICAL FIELD

The present invention relates to a tray used to heat-treat a workpiece.

### BACKGROUND ART

In recent years, ceramic materials exhibiting various characteristics have been developed and used for various ceramic products represented by electronic parts. For example, a capacitor including a dielectric ceramic material is an electronic part indispensable for an electric/electronic circuit. In particular, a stacked ceramic capacitor allows an increase in capacitance with a small volume and exhibits excellent mounting capability. Therefore, the stacked ceramic capacitor is suitable for electrical appliances or the like for which a reduction in size and weight is demanded. The stacked ceramic capacitor is known as one of the most widely used electronic parts. In recent years, a piezoelectric/electrostrictive device using a piezoelectric ceramic material has been extensively developed. A piezoelectric/electrostrictive element which makes up a piezoelectric/electrostrictive device is an electronic part utilizing an electric-field-induced strain based on inverse piezoelectric effects, electrostrictive effects, and the like, which is a microelement which exhibits a high mechanical/electrical energy conversion efficiency and can reduce power consumption. For example, the piezoelectric/electrostrictive element has been used as an actuator of which the displacement can be controlled on the order of submicrons, a sensor which detects a minute displacement, and the like in the fields of optics, precision machine, semiconductor manufacturing system, and the like.

These ceramic products are generally manufactured by machining a laminate formed by a green sheet lamination method. In more detail, a slurry obtained by mixing a ceramic material with a binder, a solvent, a dispersant, and an additive such as a plasticizer is formed in the shape of a tape. The resulting product is subjected to punching or the like to obtain a green sheet with a specific shape. The resulting green sheets are stacked to obtain a laminate (green sheet lamination method). The resulting laminate is generally integrated by firing and subjected to dicing, wire sawing, or the like to form a ceramic product with a desired shape. An electrode is appropriately formed.

A ceramic workpiece (intermediate ceramic product) is generally subjected to a heat treatment during the above process. The heat treatment is performed when firing the laminate formed by stacking the green sheets to integrate the laminate, when plating an electrode, when optionally forming an oxide film, nitride film, or the like, or when removing an additive or releasing internal stress, for example. In particular, the heat treatment is suitable for removing a resin adhering to the ceramic workpiece by heating to improve the degree of cleanliness of the ceramic product. A workpiece (intermediate product) which is not formed of a ceramic material is also subjected to the heat treatment to control the structure inside the material or remove a substance adhering to the surface of the workpiece.

The heat treatment is generally performed by placing and arranging workpieces in a tray for heat treatment made of ceramic, placing the tray for heat treatment in a heat treatment furnace, and increasing the temperature inside the heat treatment furnace to several hundred to one thousand and several hundred degrees. However, the tray for heat treatment may crack or undergo deformation such as warping when the heat treatment is repeatedly performed, thereby making it necessary to frequently replace the tray for heat treatment.

The tray for heat treatment may also crack or undergo deformation such as warping during manufacture, thereby decreasing the yield of the product. When the degree of warping is small, the tray for heat treatment may be straightened and used again. However, the straightening step decreases the productivity, thereby making it difficult to reduce the cost of the tray for heat treatment. Moreover, cracks may occur due to external pressure applied when straightening the tray for heat treatment, whereby an inferior product may be obtained. No documents have been found which disclose means for solving the above problems of the workpiece heat treatment tray.

### DISCLOSURE OF THE INVENTION

The present invention was achieved in view of the above-described problems. An object of the present invention is to provide a tray for heat treatment which does not crack or undergo deformation such as warping during use and can be manufactured by a simple process while achieving a higher yield. The inventors of the present invention have investigated the reasons why the tray for heat treatment cracks or undergoes deformation such as warping, and reached the following conclusion. Specifically, since only the holding temperature is generally regarded as important for the heat treatment using the tray for heat treatment (i.e. the temperature increase/decrease rate is not regarded as an important factor), the temperature is rapidly and repeatedly increased or decreased in order to improve the throughput of the heat treatment. This impairs the shrinkage balance inside the tray for heat treatment to increase the internal stress, whereby cracks and deformation such as warping occur. It is considered that the above problems occur when manufacturing the tray for heat treatment due to a similar phenomenon caused by increasing or decreasing the temperature during firing.

The above problems may be solved by gradually increasing or decreasing the temperature. However, this measure is not desirable since the efficiency of the heat treatment or the productivity of the tray for heat treatment is decreased. Therefore, a means which can solve the above problems without changing the temperature increase/decrease rate is desired. The inventors have conducted extensive studies from the above point of view and found that the above object can be achieved by the following means.

Specifically, the present invention provides a tray for heat treatment as set out in claim 1.

The statement "a notch formed therein" means that the notch is intentionally and necessarily formed and differs from the case where the notch is accidentally formed due to manufacturing defects or the like. Specifically, almost similar notches are generally formed in all pockets, and, when the notches differ in pocket units, such notches are intentionally formed.

The term "heat treatment of a workpiece" used herein includes a heat treatment of a finished product. In more detail, the term "heat treatment of a workpiece" used herein refers to a heat treatment performed when manufacturing a ceramic product. A heat treatment which maintains a specific temperature other than room temperature and includes increasing or decreasing the temperature falls under the heat treatment according to the present invention. The heat treatment according to the present invention is not limited to the holding temperature and the object. A heat treatment is generally performed during a manufacturing process. A workpiece generally means an intermediate product. However, since a product subjected to a heat treatment is provided with specific effects, a product (ceramic product) which has been completed with respect to the outward appearance and function also falls under the term "workpiece".

The term "side surface of the ceramic substrate which forms the pocket (hereinafter may be called "pocket side surface")" refers to the pocket forming surface other than the bottom surface (hereinafter may be called "pocket bottom surface"), which means the surface which connects the surface of the ceramic substrate which does not form the pocket with the pocket bottom surface of the pocket formed in the ceramic substrate.

It is preferable that the tray for heat treatment according to the present invention include a plurality of the notches.

When the tray for heat treatment according to the present invention includes a plurality of the notches and a plurality of the pockets, it is preferable that the notch be formed in the pocket forming surface in all the pockets of the ceramic substrate.

When the tray for heat treatment according to the present invention includes a plurality of the notches, it is preferable that the notches be formed in all side surfaces of the pocket forming surfaces of the ceramic substrate over the entire perimeter. Specifically, it is preferable that the notches be formed over the perimeter of the pocket.

It is preferable that a plurality of the notches be formed parallel to a plane direction of the plate-shaped ceramic substrate.

In the tray for heat treatment according to the present invention, the term "notch" refers to an opening formed by cutting part of the ceramic substrate. The specific shape of the notch is not limited. As examples of the shape of the notch, a groove, hole, slit, and a tapered shape can be given.

It is preferable that the notch have a triangular cross-sectional shape. When the notch has a triangular cross-sectional shape, it is still more preferable that the deepest portion of the notch form an acute angle. The term "deepest portion of the notch" refers to the portion of the notch positioned at the greatest distance from the surface of the ceramic substrate.

The term "cross-sectional shape" refers to the shape which appears in the cross section perpendicular to the plane direction of the plate-shaped ceramic substrate. It suffices that a triangular shape appear in an arbitrary cross section of such cross sections.

In the tray for heat treatment according to the present invention, it is preferable that the notch have an open width of 6 µm or less. The open width of the notch is still more preferably 5 µm or less.

It is preferable that the notch have a depth of 3 to 50 µm. The depth of the notch is more preferably 5 to 40 µm, and still more preferably 10 to 30 µm.

The term "open width of the notch" refers to the diameter of a circle inscribed to the outline of the opening of the notch observed outside from the ceramic substrate. The term "depth of the notch" refers to the length from the surface of the ceramic substrate to the deepest portion of the notch (i.e. the portion of the notch positioned at the greatest distance from the surface of the ceramic substrate). The term "surface of the ceramic substrate" used herein refers to the surface of the ceramic substrate assuming that the notch is not formed, and includes the pocket forming surface.

In the tray for heat treatment according to the present invention, it is preferable that the bottom surface of the ceramic substrate which forms the pocket be formed stepwise or irregularly.

A specific configuration of the stepwise or irregularly formed bottom surface is not limited. The term "stepwise or irregularly" means that the pocket bottom surface is not flat. A hole may be formed in the pocket bottom surface insofar as the workpiece can be reliably placed without falling.

In the tray for heat treatment according to the present invention, the specific configuration of the ceramic substrate is not limited. For example, the ceramic substrate may be formed by press-forming a ceramic material. It is preferable that the ceramic substrate be a laminate of ceramic sheets.

In the tray for heat treatment according to the present invention, the ceramic material forming the ceramic substrate is not limited. It is preferable that the workpiece be formed of a ceramic material and the ceramic substrate be formed of the same ceramic material as the ceramic material forming the workpiece. In this case, it suffices that the ceramic materials contain at least the same major component. It is preferable that the ceramic materials be completely the same including additives.

A ceramic product as the heat treatment target includes a piezoelectric/electrostrictive device including a piezoelectric/electrostrictive element. The tray for heat treatment according to the present invention may be formed of a piezoelectric/electrostrictive material used for the piezoelectric/electrostrictive element. As the ceramic material for the ceramic substrate, zirconia is widely used due to excellent durability and handling capability. The piezoelectric/electrostrictive device including the piezoelectric/electrostrictive element generally includes a substrate which supports the piezoelectric/electrostrictive element. Since zirconia is generally used as the material for the substrate of the piezoelectric/electrostrictive device, it is preferable to use zirconia as the material for the tray for heat treatment used to heat-treat the piezoelectric/electrostrictive device.

In particular, stabilized zirconia (including partially stabilized zirconia) exhibits excellent durability and handling capability and is suitable as the material for the tray for heat treatment. Since stabilized zirconia exhibits high strength, high toughness, and chemical stability, stabilized zirconia is suitable as the material for the tray for heat treatment even when heat-treating only the piezoelectric/electrostrictive element.

In the tray for heat treatment according to the present invention, it is preferable that a product formed from the workpiece be a micropositioning actuator for a magnetic or optical disk head which is formed of a ceramic material and shaped like Japanese Katakana Character "⊐". Specifically, the tray for heat treatment according to the present invention is particularly useful when the heat treatment target is a micropositioning actuator for a magnetic or optical disk head which is shaped like Japanese Katakana Character "⊐". This actuator is a piezoelectric/electrostrictive device including a piezoelectric/electrostrictive element, a pair of thin plate portions (substrates), and a securing portion. It is preferable that the tray for heat treatment used to heat-treat this actuator be formed of the same ceramic material as the ceramic material used for the thin plate portion and the securing portion.

The tray of present invention may be used in a method of manufacturing a ceramic product comprising a heat treatment step using the above-described heat treatment tray according to the present invention including the preferred embodiments. The heat treatment target is a workpiece (including a product which has been completed with respect to the outward appearance and function) of a ceramic product.

Since the tray for heat treatment according to the present invention includes the ceramic substrate including the notch formed therein, even if the temperature is rapidly and repeatedly increased or decreased between room temperature and a high temperature (several hundred to several thousand degrees) when using the tray for heat treatment (during heat treatment), internal stress which occurs due to impaired shrinkage balance can be released by the notch. Therefore, the tray for heat treatment rarely crack or undergoes deformation such as warping, whereby the life of the tray for heat treatment can be increased. This significantly reduces the replacement frequency of the tray for heat treatment. In a tray in which a notch is not formed, stress occurs only in the stress concentration area determined depending on the structure of the tray, and cracks occur when the stress has reached or exceeded the yield stress. In particular, cracks tend to occur at the edge of the bottom surface of the pocket due to stress concentration. On the other hand, the tray for heat treatment according to the present invention does not experience such a problem.

In particular, stress can be dispersed by forming a plurality of notches. Since the tray for heat treatment is used to heat-treat the workpiece, stress occurs due to the heat cycle applied to the tray for heat treatment. The stress can be dispersed by the notch because the notch can be displaced due to the stress. Specifically, since the open width of the notch can be changed, the stress is reduced.

Moreover, since the notch is intentionally formed in the pocket forming surface which affects the mechanical properties of the tray for heat treatment to only a small extent in comparison with the remaining surfaces (e.g. front surface and back surface) of the plate-shaped ceramic substrate, the above effects can be obtained without decreasing the mechanical properties of the tray for heat treatment.

Since cracks and deformation such as warping are also prevented when manufacturing the tray for heat treatment, the yield of the tray for heat treatment is increased. When applying an external pressure in order to straighten the tray for heat treatment which has been warped, since the notch releases the stress based on the applied external pressure to prevent cracks, the yield of the tray for heat treatment can be further improved.

In the tray for heat treatment according to the present invention, when the notch is formed in the side surface of the ceramic substrate which forms the pocket, cracks and deformation such as warping are further prevented. This is because the internal stress is generally concentrated on the side surface.

In the tray for heat treatment according to the present invention, when the notches are formed in all side surfaces of the pocket forming surfaces of the ceramic substrate over the entire perimeter, cracks and deformation such as warping are prevented even if stress occurs due to heat in the perimeter direction. In the tray for heat treatment, stress occurs due to a change in temperature. If the direction in which the stress occurs can be specified when forming the notch, the notch can be formed in a specific direction in order to prevent the stress. On the other hand, when the shape of the tray for heat treatment is unsymmetrical, since the amount of stress which occurs due to heat differs depending on the location inside the tray for heat treatment, stress which occurs in such a tray for heat treatment differs from the stress which occurs in a symmetrical product. Since the shape of the tray for heat treatment according to the present invention is unsymmetrical, stress due to heat may occur in the perimeter direction. Therefore, it is preferable to form the notches over the entire perimeter.

In the tray for heat treatment according to the present invention, when a plurality of the notches are formed in parallel to the plane direction of the plate-shaped ceramic substrate, cracks and deformation such as warping are further prevented in the same manner as described above. This is because the internal stress tends to occur in this direction.

In the tray for heat treatment according to the present invention, if the notch has an open width of 6 µm or less, stress can be sufficiently reduced by deformation of the notch. The open width of the notch may be zero. In this case, the notches may be bonded due to the heat treatment performed during the manufacturing process of the tray for heat treatment. A functional problem does not occur even if the open width of the notch is greater than 6 µm. However, the structural strength of the tray for heat treatment may be decreased, or an inferior product may be obtained during the manufacture.

If the depth of the notch is in an appropriate range (about 3 to 50 µm), stress can be sufficiently reduced by deformation of the notch. If the depth of the notch is less than 3 µm, since the notch merely forms surface roughness, the effect of reducing the stress due to deformation of the notch may not be obtained. A functional problem does not occur even if the depth of the notch is greater than 50 µm. However, the structural strength of the tray for heat treatment may be decreased, or an inferior product may be obtained during the manufacture.

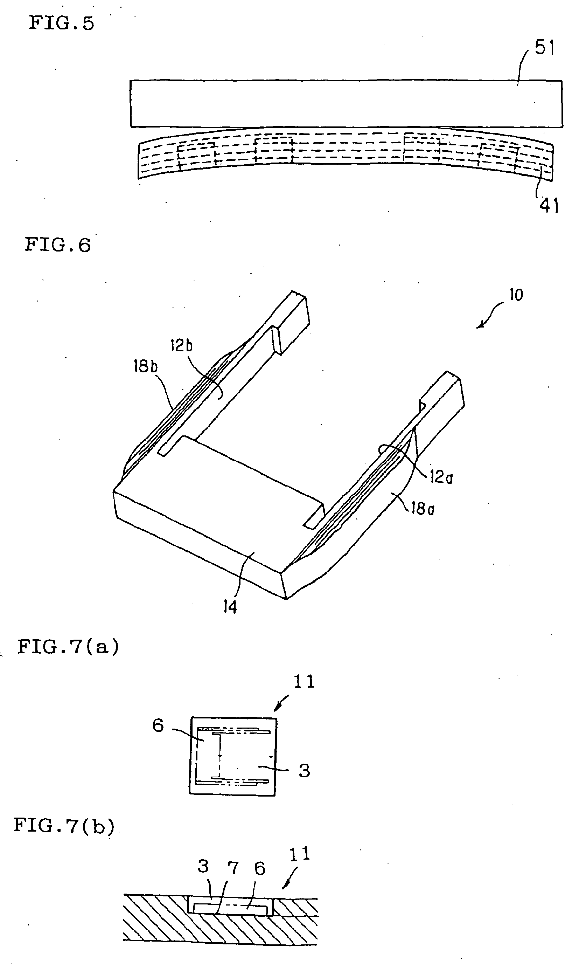

In the tray for heat treatment according to the present invention, if the bottom surface of the ceramic substrate which forms the pocket is formed stepwise or irregularly (not flat), since the contact area between the workpiece and the pocket bottom surface of the ceramic substrate is reduced, undesired bonding or integration due to a diffusion reaction accompanying the heat treatment can be prevented. In particular, when heat-treating a ceramic product which includes an electrode and a piezoelectric/electrostrictive element, since an electrode material or a piezoelectric/electrostrictive material forming the ceramic product generally has a melting point lower than that of the material forming the ceramic substrate, part of the electrode may adhere to the pocket bottom surface due to heat if the contact area between the electrode or the like of the ceramic product and the pocket bottom surface is increased. Moreover, the quality of the product may deteriorate due to a change in the composition of the electrode in the contact area. In particular, since a micropositioning actuator for a magnetic or optical disk head which is shaped like Japanese Katakana Character "⊐" has a structure in which stress concentration occurs at the edge (see FIG. 6), the actuator may break when stress occurs due to adhesion. Moreover, since a decrease in strength or the like occurs in the tray for heat treatment due to a change in the composition in the contact area, the tray for heat treatment may break when subjected to stress due to heat.

If the pocket bottom surface of the ceramic substrate is flat, since the surface of the workpiece on the side of the pocket bottom surface may not be exposed to the atmosphere in a state in which the workpiece is placed in the pocket, the heat treatment effect may not be uniformly exerted on the entire workpiece, whereby the quality of the product may deteriorate. In the tray for heat treatment according to the present invention, since the pocket bottom surface of the ceramic substrate is formed stepwise or irregularly, the surface of the workpiece on the side of the pocket bottom surface is directly exposed to the atmosphere in the same manner as the surface of the workpiece opposite to the pocket bottom surface, whereby the surfaces can be uniformly heat-treated. Note that it is preferable that the bottom surface of the ceramic substrate formed stepwise or irregularly be smooth in the area in which the bottom surface contacts the workpiece. If the bottom surface forms an acute angle in the contact area with the workpiece, scratches tend to occur, whereby the yield of the ceramic product formed from the workpiece may be decreased.

In the tray for heat treatment according to the present invention, if the ceramic substrate is formed of the same ceramic material as the workpiece, contamination due to foreign matter does not occur. This is effective for preventing a decrease in the yield of the ceramic product formed from the workpiece.

In the tray for heat treatment according to the present invention, if the ceramic substrate is a laminate of ceramic sheets, the ceramic substrate can be easily formed, and the cost of the ceramic substrate can be reduced. Moreover, the shape accuracy, mechanical properties (strength), and the like can be easily improved, and the notch can be easily formed in the pocket forming surface.

Since the tray for heat treatment according to the present invention exhibits resistance to a high-temperature heat treatment involving a rapid increase or decrease in temperature and rarely causes damage to the workpiece and contamination due to foreign matter, an organic substance or the like which is contained in the raw material additive and has entered minute pores of the workpiece can be effectively removed. Therefore, the tray for heat treatment according to the present invention is particularly useful as a tray used to heat-treat a micropositioning actuator for a magnetic or optical disk head which is formed of a ceramic material and shaped like Japanese Katakana Character "⊐". This is because such an actuator requires a high degree of cleanliness during the heat treatment in order to maintain the long term reliability of the product.

In a method of manufacturing a ceramic product which includes the heat treatment step using the tray for heat treatment according to the present invention including the preferred embodiments, the above-described effects, such as preventing bonding due to the heat treatment, preventing contamination due to foreign matter, effectively removing foreign matter contained in the raw material, and uniformly heat-treating the surfaces, can be obtained, whereby a ceramic product with excellent quality can be obtained while preventing a decrease in the yield of the ceramic product.

### BRIEF DESCRIPTION OF THE DRAWINGS

FIG. 1 is a perspective view showing one embodiment of a tray for heat treatment according to the present invention.
FIG. 2 is an enlarged cross-sectional view along the line AA in FIG. 1 showing an area near one pocket.
FIG. 3 is a view showing another embodiment of the tray for heat treatment according to the present invention, in which FIG. 3(a) is a top view, FIG. 3(b) is a side view, and FIG. 3(c) is rear view.
FIG. 4(a) is a cross-sectional view showing the state when straightening a fired laminate in which a notch is formed, and FIG. 4(b) is a cross-sectional view showing the state when straightening a fired laminate in which a notch is not formed.
FIG. 5 is a side view illustrative of a straightening step in a method of manufacturing the tray for heat treatment according to the present invention.
FIG. 6 is a perspective view showing a specific example of a ceramic product formed from a ceramic workpiece.
FIG. 7 is an enlarged view of an area near one pocket in one embodiment of the tray for heat treatment according to the present invention, in which FIG. 7(a) is a top view and FIG. 7(b) is a cross-sectional view.
FIG. 8 is an enlarged view of an area near one pocket in one embodiment of the tray for heat treatment according to the present invention, in which FIG. 8(a) is a top view and FIG. 8(b) is a cross-sectional view.
FIG. 9 is an enlarged view of an area near one pocket in one embodiment of the tray for heat treatment according to the present invention, in which FIG. 9(a) is a top view and FIG. 9(b) is a cross-sectional view.
FIG. 10 shows the case where a ceramic workpiece is moved in the pocket in FIGS. 9(a) and 9(b), in which FIG. 10(a) is a top view and FIG. 10(b) is a cross-sectional view.
FIG. 11 is an enlarged cross-sectional view of an area near one pocket in one embodiment of the tray for heat treatment according to the present invention.
FIG. 12 is an enlarged cross-sectional view of an area near one pocket in one embodiment of the tray for heat treatment according to the present invention.

### EXPLANATION OF SYMBOLS

1, 11: heat treatment tray, 2: ceramic substrate, 3: pocket, 4: side surface, 5: notch, 6: ceramic workpiece, 7: bottom surface, 10: ceramic product, 16a, 16b, 16c, 16d, 16e: ceramic sheet

### BEST MODE FOR CARRYING OUT THE INVENTION

Embodiments of the present invention are described below with reference to the drawings. Note that the present invention is not limited to the following embodiments. Although the drawings represent preferred embodiments of the present invention, the present invention is not limited to the embodiments illustrated in the drawings or the information provided in the drawings. Although the present invention may be practiced or verified by applying means similar to or equivalent to means described herein, preferred means is the means described herein.

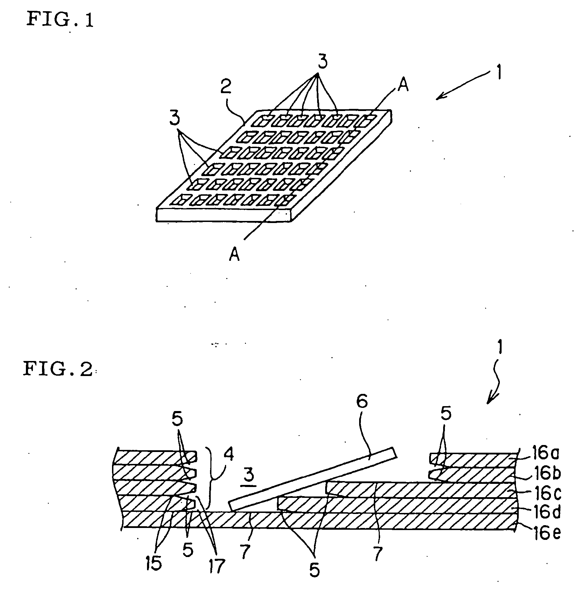

FIG. 1 is a perspective view showing one embodiment of the tray for heat treatment according to the present invention, and FIG. 2 is an enlarged cross-sectional view along the line AA in FIG. 1 showing an area near one pocket. A tray for heat treatment 1 includes a plate-shaped ceramic substrate 2 which is formed of a laminate in which five ceramic sheets 16a, 16b, 16c, 16d, and 16e ("ceramic sheet" may be simply referred to as "sheet") are stacked. A plurality of pockets 3 for placing a ceramic workpiece 6 (workpiece formed of a ceramic material) when heat-treating the ceramic workpiece 6 are formed in the ceramic substrate 2. A notch 5 which is open toward the inside of the ceramic substrate 2 is formed in a side surface 4 (pocket side surface) of the ceramic substrate 2 which forms the pocket 3.

The notches 5 are formed by shaving each of the sheets 16a, 16b, 16c, and 16d forming the ceramic substrate 2 other than the sheet 16e at the edge of the end face facing the pocket 3. The notch 5 is in the shape of a slit in which the open cross section is gradually reduced toward a bottom portion 15. The notch 5 is formed in the direction parallel to the plane direction of the plate-shaped ceramic substrate 2 (i.e. the plane direction of the sheets 16a, 16b, 16c, 16d, and 16e). The direction in which the notch 5 is formed refers to the direction which connects an opening 17 connected with the pocket 3 and the bottom portion 15. In the tray for heat treatment 1, the notch 5 has a depth of about 3 to 50 µm*.*

In the tray for heat treatment 1, a bottom surface 7 (pocket bottom surface) of the ceramic substrate 2 which forms the pocket 3 is formed stepwise and is not flat. Therefore, the ceramic workpiece 6 does not contact the bottom surface 7 over the whole surface, but contacts the bottom surface 7 in the pocket 3 at specific points, as shown in FIG. 2.

FIG. 6 shows a specific example of a ceramic product formed from the ceramic workpiece 6. A ceramic product 10 shown in FIG. 6 is an actuator which is shaped like Japanese Katakana Character "⊐" and is mainly used as micropositioning means for an optical disk head, in which a pair of thin plate portions 12a and 12b opposite to each other and a securing portion 14 which supports the pair of thin plate portions 12a and 12b are integrally formed, and piezoelectric/electrostrictive elements 18a and 18b are respectively formed in part of the pair of thin plate portions 12a and 12b. The pair of thin plate portions 12a and 12b is displaced due to drive of the piezoelectric/electrostrictive element 18a and/or 18b to position a pickup held by the thin plate portions 12a and 12b. In this actuator, the thin plate portions 12a and 12b and the securing portion 14 which supports the thin plate portions 12a and 12b are formed of a ceramic material. Therefore, it is preferable that the tray for heat treatment used to heat-treat this actuator include a ceramic substrate formed of the same ceramic material as the ceramic material for the thin plate portions 12a and 12b and the securing portion 14.

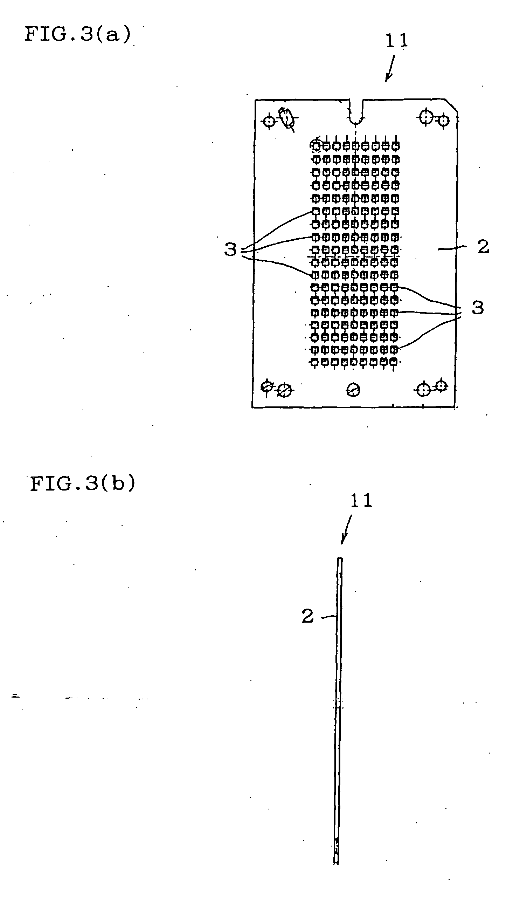

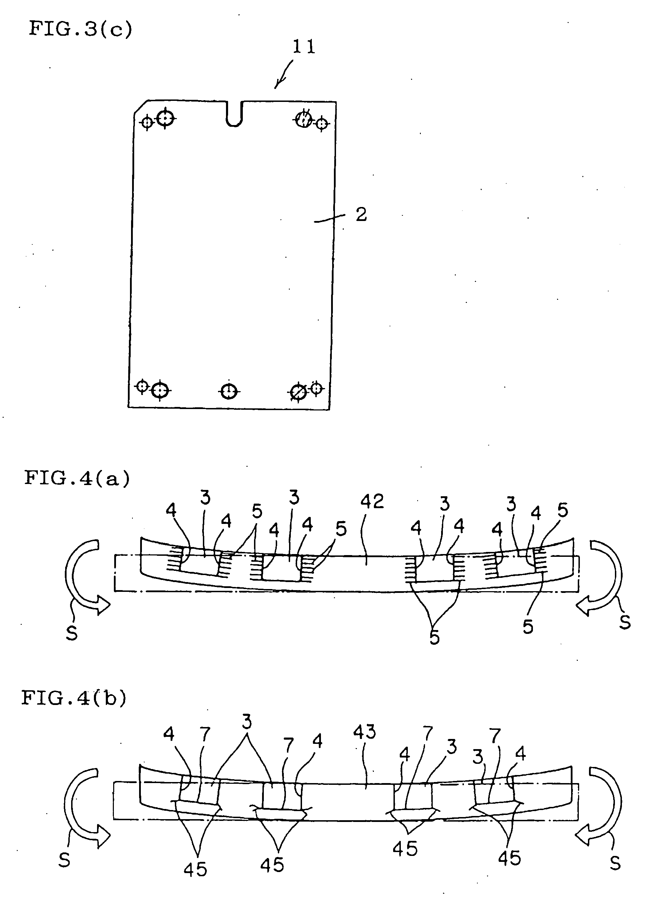

FIG. 3(a) is a top view showing another embodiment of the tray for heat treatment according to the present invention, FIG. 3(b) is a side view, and FIG. 3(c) is a rear view. A tray for heat treatment 11 shown in these drawings is a tray for heat treatment used for heat treatment in the manufacturing process of the above ceramic product 10. Since the ceramic product 10 is very thin and small with a thickness of about 0.2 mm, a length (direction of the thin plate portion) of about 3 mm, and a width (direction of the securing portion) of about 2 mm, the tray for heat treatment 11 includes an extremely thin ceramic substrate 2 as shown in FIG. 3(b), in which a number of small pockets 3 for placing the ceramic product 10 (ceramic workpiece 6) are formed in the ceramic substrate 2.

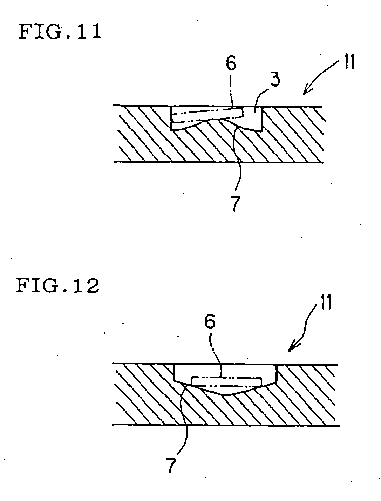

In the tray for heat treatment according to the present invention, the configuration of the bottom surface of the ceramic substrate which forms the pocket is not limited to the bottom surface 7 of the tray for heat treatment 1 which is formed stepwise. FIGS. 7(a) and 7(b), FIGS. 8(a) and 8(b), FIGS. 9(a) and 9(b), and FIGS. 10(a) and 10(b) are respectively enlarged top views and enlarged cross-sectional views of the tray for heat treatments having different configurations of the pocket bottom surface in the area near one pocket. FIGS. 11 and 12 are cross-sectional views of the tray for heat treatments. These drawings show examples in which a ceramic workpiece of the ceramic product 10 is placed in the pocket 3 as the ceramic workpiece 6.

FIG. 7(a) (top view) and FIG. 7(b) (cross-sectional view) show the case where the bottom surface 7 is flat. Since the configuration of the bottom surface of the tray for heat treatment according to the present invention is not limited, such a tray for heat treatment can also be classed as the tray for heat treatment according to the present invention. However, since the contact area between the ceramic workpiece 6 and the bottom surface 7 of the ceramic substrate 2 is large, undesired bonding or integration due to a diffusion reaction accompanying the heat treatment may occur. Therefore, this embodiment is not necessarily the best mode according to the present invention.

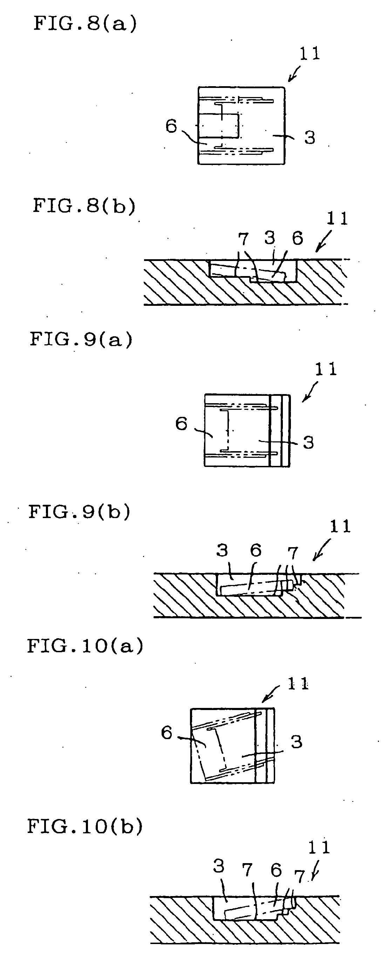

FIG. 8(a) (top view) and FIG. 8(b) (cross-sectional view) show the case where a level difference is formed near the center of the bottom surface 7. In this case, the contact area between the ceramic workpiece 6 and the bottom surface 7 of the ceramic substrate 2 is reduced in the same manner as in the embodiment shown in FIG. 2, whereby undesired bonding or integration of the ceramic workpiece 6 and the bottom surface 7 rarely occurs.

FIG. 9(a) (top view) and FIG. 9(b) (cross-sectional view) show the case where a two-stage level difference is formed on the end of the bottom surface 7 (FIG. 10(a) and 10(b) are also enlarged views of the same heat treatment tray near the pocket excluding the ceramic workpiece 6). In this case, the contact area between the ceramic workpiece 6 and the bottom surface 7 of the ceramic substrate 2 is reduced in the same manner as in FIG. 2 and FIGS. 8(a) and 8(b), whereby bonding of the ceramic workpiece 6 and the bottom surface 7 rarely occurs. As shown in FIG. 10(a) and 10(b), since the flat portion of the bottom surface 7 other than the two-stage level difference is narrower than the ceramic workpiece 6, even if the ceramic workpiece 6 is moved in the pocket 3, the ceramic workpiece 6 does not fully contact the bottom surface 7, whereby the ceramic workpiece 6 is rarely bonded to the bottom surface 7.

FIG. 11 (cross-sectional view) shows the case where a gentle protrusion is formed near the center of the bottom surface 7. In this embodiment, the contact area between the ceramic workpiece 6 and the bottom surface 7 of the ceramic substrate 2 is reduced in the same manner as in the above examples, whereby undesired bonding or integration of the ceramic workpiece 6 and the bottom surface 7 rarely occurs. FIG. 12 (cross-sectional view) shows the case where a gentle recess is formed near the center of the bottom surface 7. This embodiment can also exert the same effects as those of the above examples.

The tray for heat treatment according to the present invention was described above. An example of a method of manufacturing the tray for heat treatment according to the present invention is described below. The method of manufacturing the tray for heat treatment according to the present invention includes a material mixing step, a tape forming step, an adhesive layer printing step, a punching/stacking step, a firing step, a straightening step, and a surface grinding step. The method is described below in detail.

A ceramic material powder is provided. For example, a mixed material of zirconia (particle size: 0.14 µm) and alumina may be used. A binder, solvent, dispersant, plasticizer, and the like are mixed with the ceramic material powder to prepare a slurry (material mixing step). The resulting slurry is defoamed and formed in the shape of a tape using a tape forming machine (tape forming step). Since the tape is considered to be a product in which divided sheets are connected, the slurry may be formed in the shape of a sheet using a sheet forming method such as a doctor blade method or a reverse roll coating method depending on the size of the tray for heat treatment to be manufactured.

An adhesive layer is printed on one side of the resulting tape using a screen printing machine (adhesive layer printing step). The adhesive layer is preferably formed of the same material as the tape. A mixed material of zirconia, alumina, and a plasticizer may be used. The tape on which the adhesive layer is printed is cut into sheets while punching the tape using a punching die or a punching machine (e.g. SS puncher), and the resulting sheets are stacked using a laminator to obtain a laminate (punching/stacking step).

The term "punching" refers to an operation of forming the pocket. The term "punching" is described below taking the tray for heat treatment 1 shown in FIG. 2 as an example. After forming an opening in each of the sheets forming the ceramic substrate 2 (the sheets 16a, 16b, 16c, and 16d other than the sheet 16e) by punching, the sheets 16a, 16b, 16c, 16d, and 16e are stacked, whereby the pocket 3 in which the level difference as shown in FIG. 2 is formed at the bottom surface 7 is formed in the laminate.

The resulting laminate is placed in a heat treatment furnace and fired at a specific temperature (e.g. 1450°C) for a specific time (e.g. two hours) to obtain a fired laminate (firing step). The fired laminate corresponds to the ceramic substrate. The fired laminate may be warped by firing. In this case, the fired laminate must be straightened (straightening step). FIG. 5 is a side view illustrative of the straightening step. As shown in FIG. 5, a warped fired laminate 41 is placed in a heat treatment furnace in a state in which a weight 51 is placed on the fired laminate 41, and heat-treated at a specific temperature (e.g. 1450°C) for a specific time (e.g. two hours) to straighten the fired laminate. As the weight 51, an alumina plate or the like is used. The outer surface of the straightened fired laminate is then made flat and smooth using a surface grinding machine to obtain a tray for heat treatment according to the present invention.

As the method of forming a notch in the pocket forming surface, the following three methods can be given. A first method includes forming a recess during the above punching and firing the resulting product to form a notch. The first method is the most preferable method as it allows an easy operation and does not increase cost. In the first method, the clearance between upper and lower blades of the punching die is appropriately adjusted to form a small recess which forms a notch in the punched sheet at the edge of the end face forming an opening obtained by punching. In more detail, when punching the sheet using the punching die, a compressive force is applied to the sheet by the blade and the sheet is cut due to shear, whereby an opening is formed. The sheet can be reduced in thickness and dented (about 3 µm) near (about 10 µm) the opening formed by the compressive force applied to the sheet by adjusting the clearance between the blades to about 2 to 16 µm. The dented portion does not adhere to the adjacent sheet when the sheets are stacked. Therefore, the dented portion is not bonded to the adjacent sheet and remains as a notch. The term "clearance" used herein refers to the dimension of the opening between the upper and lower blades. If the clearance is less than 2 µm, the upper and lower blades are in contact, whereby the life of the blade may be decreased or the blade may break. If the clearance is greater than 16 µm, the punching accuracy may be decreased, whereby the dimensional accuracy of the tray may deteriorate.

A second method of forming a notch in the pocket forming surface includes providing foreign matter in the portion (pocket forming surface) in which a notch is formed in the state of the sheet before being stacked, and forming a notch by removing the foreign matter. As an example of the foreign matter, a resin which is burned off during firing can be given. The resin is applied to the sheet, or formed in the shape of a sheet and inserted between the sheets.

A third method of forming a notch in the pocket forming surface includes forming a fired laminate in which a notch is not formed, and forming a notch in the pocket forming surface by machining such as cutting or grinding, differing from the first method and the second method. A notch may be formed by a chemical treatment such as etching or laser thermal processing, or by utilizing a partial decomposition reaction of the ceramic material instead of machining.

When forming a notch using the first method or the second method, a notch is formed before the straightening step. On the other hand, when forming a notch using the third method, since a notch does not exist after the firing step, it is important to perform the straightening step after forming a notch instead of immediately performing the straightening step. The third method requires the notch formation step after the firing step. Since it is difficult to process the sintered ceramic body with high hardness, cost is increased to some extent in comparison with the first method and the second method.

FIG. 4(a) is a cross-sectional view showing the state of straightening a fired laminate in which a notch is formed, and FIG. 4(b) is a cross-sectional view showing the state of straightening a fired laminate in which a notch is not formed. In a fired laminate 42 in which the notch 5 is formed in the side surface 4 which forms the pocket 3, when an external pressure which straightens the warped fired laminate 42 is applied (using a weight or the like) in a direction S, the notch 5 releases the stress based on the applied external pressure to prevent cracks. On the other hand, in a fired laminate 43 in which the notch is not formed, when an external pressure which straightens the warped fired laminate 42 is applied in the direction S, the stress based on the applied external pressure cannot be released, whereby cracks 45 occur near the corners at which the side surface 4 of the pocket 3 contacts the bottom surface 7. Since it is difficult repair a fired laminate in which cracks have occurred, it is important to form a notch before the straightening step.

The method of manufacturing the tray for heat treatment according to the present invention is described above. A method of manufacturing a ceramic product according to the present invention includes a heat treatment step using the tray for heat treatment according to the present invention. The object of the heat treatment, the heat treatment conditions, a specific ceramic product, and the like are not limited insofar as a workpiece (intermediate product) is heat-treated using the tray for heat treatment according to the present invention in the manufacturing process of the ceramic product. For example, a ceramic product may be manufactured using a manufacturing method which includes a raw material mixing and slurry forming step (mixing a binder, solvent, dispersant, and additive such as plasticizer with a ceramic material to obtain a slurry), a tape forming step, a punching/stacking step (to obtain a laminate), a firing step, an electrode printing step, a washing step, a heat treatment step, an inspection step, and a washing step. A method which uses the tray for heat treatment according to the present invention in the heat treatment step falls under the method of manufacturing a ceramic product according to the present invention.

The method which uses the tray for heat treatment according to the present invention is not particularly limited insofar as the tray for heat treatment is held almost horizontally so that the pocket faces upward during use. An operation of placing a ceramic workpiece (heat treatment target) in the pocket of the tray for heat treatment, placing the tray for heat treatment in a heat treatment furnace, removing the tray for heat treatment from the heat treatment furnace after the heat treatment, and removing the heat-treated ceramic workpiece from the pocket of the tray for heat treatment is repeatedly performed.

### INDUSTRIAL APPLICABILITY

The tray for heat treatment according to the present invention is suitably used in a manufacturing process of various ceramic products formed of a ceramic material such as a piezoelectric ceramic material or a dielectric ceramic material. As examples of the ceramic product which is preferably subjected to the heat treatment using the tray for heat treatment according to the present invention, a capacitor, a transducer, an actuator, a frequency region functional part such as a filter, a vibrator, resonator, and oscillator used for a communication instrument and an ultrasonic motor, an active element such as a discriminator, a sensor element, and other electronic parts can be given. In particular, the tray for heat treatment according to the present invention is suitably used to heat-treat a ceramic product which requires a high degree of cleanliness during the heat treatment in order to maintain the long term reliability of the product. As examples of such a ceramic product, various actuators used for a mechanism of displacement adjustment, positioning, or angle adjustment of various precision parts or the like in optical instruments or precision instruments can be given. As a specific example of such a ceramic product, a micropositioning actuator for a magnetic or optical disk head which is formed of a ceramic material and shaped like Japanese Katakana Character "⊐" can be given.

## Claims

1. A tray for heat treatment comprising a plate-shaped ceramic substrate (2) being a laminate of ceramic sheets, which includes at least one pocket (3) for placing a workpiece and a notch (5) formed in the side surface (4) of the ceramic substrate which forms the pocket over the entire perimeter of the pocket, the notch extending parallel to a plane direction of the plate-shaped ceramic substrate.

2. The tray for heat treatment according to claim 1, wherein a plurality of the notches (5) is formed in every pocket (3), respectively.

3. The tray for heat treatment according to claim 1 or 2, wherein each notch is formed in a side surface (4) of every pocket formed in the ceramic substrate.

4. The tray for heat treatment according to any one of claims 1 to 3, wherein the notch has a triangular cross-sectional shape.

5. The tray for heat treatment according to any one of claims 1 to 4, wherein the notch has an open width of 6 µm or less.

6. The tray for heat treatment according to any one of claims 1 to 5, wherein the notch has a depth of 3 to 50 µm.

7. The tray for heat treatment according to any one of claims 1 to 6, wherein a bottom surface (7) of the ceramic substrate which forms the pocket is formed stepwise or irregularly.

## Patentansprüche

1. Schale zur Wärmebehandlung, umfassend ein plattenförmiges Keramiksubstrat (2), das ein Laminat von Keramiklagen ist und das zumindest eine Ausnehmung (3), um ein Werkstück darin zu platzieren, sowie eine in der Seitenoberfläche (4) des die Ausnehmung bildenden Keramiksubstrats ausgebildete Nut (5) entlang des gesamten Umfangs der Ausnehmung umfasst, wobei sich die Nut parallel zu der Richtung einer Ebene des plattenförmigen Keramiksubstrats erstreckt.

2. Schale zur Wärmebehandlung nach Anspruch 1, worin jeweils eine Vielzahl an Nuten (5) in jeder Ausnehmung (3) ausgebildet ist.

3. Schale zur Wärmebehandlung nach Anspruch 1 oder 2, worin jede Nut in einer Seitenoberfläche (4) jeder in dem Keramiksubstrat ausgebildeten Ausnehmung verläuft.

4. Schale zur Wärmebehandlung nach einem der Ansprüche 1 bis 3, worin die Nut eine dreieckige Querschnittsform aufweist.

5. Schale zur Wärmebehandlung nach einem der Ansprüche 1 bis 4, worin die Nut eine offene Breite von 6 µm oder weniger aufweist.

6. Schale zur Wärmebehandlung nach einem der Ansprüche 1 bis 5, worin die Nut eine Tiefe von 3 bis 50 µm aufweist.

7. Schale zur Wärmebehandlung nach einem der Ansprüche 1 bis 6, worin eine Bodenoberfläche (7) des die Ausnehmung bildenden Keramiksubstrats stufenförmig oder unregelmäßig ausgebildet ist.

## Revendications

1. Plateau de traitement à la chaleur comprenant un substrat céramique en forme de plaque (2) qui est un stratifié de feuilles céramiques, qui inclut au moins une poche (3) destinée à placer une pièce de fabrication et une encoche (5) formée dans la surface latérale (4) du substrat céramique qui forme la poche sur le périmètre entier de la poche, l'encoche s'étendant parallèlement à une direction de plan du substrat céramique en forme de plaque.

2. Plateau de traitement à la chaleur selon la revendication 1, dans lequel une pluralité d'encoches (5) est formée dans chaque poche (3), respectivement.

3. Plateau de traitement à la chaleur selon la revendication 1 ou 2, dans lequel chaque encoche est formée dans une surface latérale (4) de chaque poche formée dans le substrat céramique.

4. Plateau de traitement à la chaleur selon l'une quelconque des revendications 1 à 3, dans lequel l'encoche a une forme en coupe triangulaire.

5. Plateau de traitement à la chaleur selon l'une quelconque des revendications 1 à 4, dans lequel l'encoche a une largeur ouverte de 6 µm ou moins.

6. Plateau de traitement à la chaleur selon l'une quelconque des revendications 1 à 5, dans lequel l'encoche a une profondeur de 3 à 50 µm.

7. Plateau de traitement à la chaleur selon l'une quelconque des revendications 1 à 6, dans lequel une surface inférieure (7) du substrat céramique qui forme la poche est formée par paliers ou de façon irrégulière.
